# EUROPEAN PATENT APPLICATION

(11) **EP 4 752 344 A1**
(43) Date of publication of application: **03.06.2026**
(21) Application number: 25215290.5
(22) Date of filing: 12.11.2025
(51) Int. Cl.: F01N 3/28

(54) **EXHAUST STRUCTURE OF ENGINE, ENGINE AND VEHICLE**

(30) Priority: 02.12.2024 JP 2024209498
(71) Applicant: MAZDA MOTOR CORPORATION, Hiroshima 730-8670 (JP)
(72) Inventor: Yashiro, Koichi, Aki-gun, Hiroshima (JP); Kuramashi, Taku, Aki-gun, Hiroshima (JP); Hamahata, Yoshiaki, Aki-gun, Hiroshima (JP)
(74) Representative: Müller-Boré & Partner Patentanwälte PartG mbB

(57) **Abstract**

A plurality of independent passages (51), a collecting passage (52), a catalyst device (6), and a swirling part (53) are provided to an exhaust passage, the plurality of independent passages (51) individually extending from exhaust port opening ends (12), exhaust gas that passes through the independent passages being collected in the collecting passage (52), the swirling part (53) connecting the collecting passage to the catalyst device (6) to cause the exhaust gas to swirl in the swirling part. The plurality of independent passages and the collecting passage have, as a whole, a shape that is bent in such a way as to bulge toward an exhaust side from the plurality of exhaust port opening ends and to extend downward, and the swirling part has a shape that causes the exhaust gas led out from the collecting passage to swirl about an axis extending along a cylinder arrangement direction.

## Description

### [Technical Field]

The present invention relates to an exhaust structure for an engine. The present invention also relates to an engine and a vehicle.

### [Background Art]

Conventionally, it is known that engines provided to vehicles or the like include a catalyst device provided in an exhaust passage to purify exhaust gas. Further, studies have been conducted on increasing the purification performance of this catalyst device.

Patent Literature 1, for example, discloses an engine in which exhaust gas is swirled to disperse the exhaust gas, thereby causing the exhaust gas to uniformly flow into a catalyst device to improve the purification performance of the catalyst device. Specifically, in this engine, a swirl flow generator having a substantially circular columnar shape is provided upstream of the catalyst device (a catalyst converter of Patent Literature 1), the swirl flow generator is disposed at a position below the outlets of exhaust ports in an attitude extending in the up-down direction, respective exhaust pipes are connected to the upper portion of the swirl flow generator, and the direction of each exhaust pipe is changed by substantially 90° once or twice at the halfway portion of the exhaust pipe.

### [Citation List]

### [Patent Literature]

[Patent Literature 1] Japanese Patent Laid-Open No. 2006-9793

### [Summary]

### [Problems to be Solved]

As described above, in the structure of Patent Literature 1, the direction of exhaust gas is significantly changed once or twice before the exhaust gas reaches the swirl flow generator. Therefore, with this structure, there is a possibility that the force of the swirl flow is weak at the swirl flow generator, so that the effect of dispersing exhaust gas cannot be sufficiently obtained.

The present invention has been made under the above-mentioned circumstances, and it is an object of the present invention to improve the purification performance of the catalyst device by promoting swirling and dispersion of exhaust gas.

### [Means for Solving the Problems]

The above-mentioned problem is solved by the invention as defined in claim 1. For example, an engine or an exhaust structure for an engine includes: an engine body in which a plurality of cylinders and a plurality of exhaust ports are formed, the plurality of cylinders being arranged in a cylinder arrangement direction, which is predetermined, the plurality of exhaust ports extending from the plurality of cylinders; and an exhaust passage through which exhaust gas led out from the engine body flows. When one side in an engine width direction, which is orthogonal to the cylinder arrangement direction and an up-down direction, is taken as an exhaust side, and an opposite side of the exhaust side is taken as an intake side, a plurality of exhaust port opening ends are open on a side surface of the engine body on the exhaust side. The plurality of exhaust port opening ends are outlets of the plurality of exhaust ports. The exhaust passage includes a plurality of independent passages, a collecting passage, a catalyst device, and a swirling part. The plurality of independent passages individually extend in the engine width direction from the plurality of exhaust port opening ends toward the exhaust side. The collecting passage is connected to end portions of the plurality of independent passages on a downstream side in a flow direction of exhaust gas. The exhaust gas that passes through the plurality of independent passages are collected in the collecting passage. The catalyst device is provided downstream of the collecting passage to purify the exhaust gas. The swirling part connecting the collecting passage to the catalyst device to cause the exhaust gas to swirl in the swirling part. The plurality of independent passages and the collecting passage have, as a whole, a shape that is bent in such a way as to bulge toward the exhaust side from the plurality of exhaust port opening ends and to extend downward. The swirling part has a shape that is configured to cause the exhaust gas led out from the collecting passage to swirl about an axis extending along the cylinder arrangement direction. In other words, the swirling part is configured to cause the exhaust gas led out from the collecting passage to swirl about an axis extending along the cylinder arrangement direction.

With this configuration, at the swirling part provided upstream of the catalyst device, exhaust gas can be swirled about the axis extending along the cylinder arrangement direction and hence, it is possible to cause the exhaust gas to flow into the catalyst device after the exhaust gas is dispersed through the swirl.

Further, with this configuration, the respective independent passages and the collecting passage, which is disposed downstream of the independent passages, have, as a whole, a shape that is bent in such a way as to bulge toward the exhaust side from the exhaust port opening ends and to extend downward. That is, the entire exhaust channel, extending from the respective exhaust port opening ends to the swirling part, is configured to extend into an arc shape about an axis extending in the cylinder arrangement direction. Therefore, it is possible to cause exhaust gas led out from the respective exhaust port opening ends to vigorously flow into the swirling part, and to cause the exhaust gas to swirl in the swirling part while substantially maintaining the force of the flow, thereby promoting swirling and dispersion of the exhaust gas. Accordingly, it is possible to improve the purification performance of the catalyst device by more uniformly introducing exhaust gas into the catalyst device.

The plurality of exhaust port opening ends may be formed at a center portion or substantially at a center portion in the cylinder arrangement direction of the side surface of the engine body on the exhaust side.

With this configuration, the respective independent passages can be disposed in an attitude in which the independent passages are more nearly parallel to each other. Therefore, exhaust gas that passes through the respective independent passages is made to flow equally in the collecting passage and the swirling part and hence, it is possible to reduce variation in inflow of exhaust gas into the catalyst device between the independent passages, that is, cylinders. That is, exhaust gas can be uniformly introduced into the catalyst device from all cylinders and hence, it is possible to reliably improve the purification performance of the engine.

The catalyst device may have a cylindrical shape extending in the cylinder arrangement direction, and the swirling part may have a shape that covers an end portion of the catalyst device on an upstream side in the flow direction of the exhaust gas from one side in the cylinder arrangement direction.

With such a configuration, exhaust gas is swirled and dispersed on the end surface of the catalyst device on the upstream side and hence, it is possible to reliably and uniformly introduce the exhaust gas into the catalyst device.

The swirling part may have an inner peripheral surface having a substantially circular shape when viewed along the cylinder arrangement direction, and an end portion of the collecting passage on a downstream side may be connected to a lower portion of a side surface of the swirling part. The side surface is located on the exhaust side in the engine width direction.

With such a configuration, the entire exhaust channel, extending from the respective exhaust port opening ends to the swirling part, has an arc shape extending along the peripheral surface of a portion of the swirling part, the portion being located near the connection portion between the swirling part and the collecting passage. Accordingly, it is possible to further promote swirling and dispersion of exhaust gas in the swirling part.

In a cross section of the catalyst device, the cross section passing through a center axis of the catalyst device and extending in the up-down direction, a separation distance between the inner peripheral surface of the swirling part and an upstream end of the catalyst device in the cylinder arrangement direction may be smaller at an upper area than a lower area. In other words, a separation distance between the inner peripheral surface of the swirling part and an upstream end of the catalyst device in the cylinder arrangement direction at an upper area may be smaller than a separation distance between the inner peripheral surface of the swirling part and the upstream end of the catalyst device in the cylinder arrangement direction at a lower area. The upper area is located above a center axis of the swirling part. The lower area is located below the center axis of the swirling part.

With such a configuration, the area of the channel is increased at the lower portion of the swirling part, the lower portion being located close to the exhaust gas inlet, thereby allowing exhaust gas to smoothly flow into the swirling part, and promoting dispersion of the exhaust gas by dispersing the exhaust gas in the radial direction at the upper portion of the swirling part.

The engine body may include four or more cylinders, and the exhaust ports of the plurality of cylinders whose combustion order is non-consecutive may be collected in the engine body.

With such a configuration, exhaust interference between the cylinders is suppressed, and the number of exhaust port opening ends and the number of independent passages can be reduced. The number of independent passages can be reduced and hence, it is possible to dispose the respective independent passages in an attitude in which the independent passages are more nearly parallel to each other. Therefore, exhaust gas that passes through the respective independent passages is made to flow more equally in the collecting passage and the swirling part and hence, it is possible to further reduce variation in inflow of exhaust gas into the catalyst device between the independent passages, that is, the cylinders, thereby further improving the purification performance of the engine.

### [Advantageous Effects]

As has been described above, with the exhaust structure for an engine of the present invention, the purification performance of the catalyst device can be improved by promoting dispersion of exhaust gas.

### [Brief Description of Drawings]

FIG. 1 is a schematic plan view of an engine to which an exhaust structure for an engine according to one embodiment of the present invention is applied.
FIG. 2 is a schematic side view of the engine shown in FIG. 1, as viewed from the right side.
FIG. 3 is a schematic side view of the engine shown in FIG. 1, as viewed from the front side.
FIG. 4 is a schematic perspective view showing a portion of the engine shown in FIG. 1, as viewed obliquely from the front right.
FIG. 5 is a cross-sectional view showing, in an enlarged manner, a portion of the cross section taken along line V-V in FIG. 3.
FIG. 6 is a cross-sectional view showing, in an enlarged manner, a portion of the cross section taken along line VI-VI in FIG. 3.
FIG. 7 is a cross-sectional view showing, in an enlarged manner, a portion of the cross section taken along line VII-VII in FIG. 5.
FIG. 8 is a cross-sectional view showing, in an enlarged manner, a portion of the cross section taken along line VIII-VIII in FIG. 6.
FIG. 9 is a schematic side view of the engine with a cover attached, FIG. 9 corresponding to FIG. 2.
FIG. 10 is a schematic bottom view of the engine with the cover attached.
FIG. 11 is diagram showing, in an enlarged manner, a portion of the cross section taken along line VII-VII in FIG. 5 and an area around the line VII-VII, and is a cross-sectional view of the engine with the covers attached.
FIG. 12 is a cross-sectional view for illustrating the flow of exhaust gas in an exhaust passage, FIG. 12 corresponding to FIG. 7.

### [Mode for carrying out the Invention]

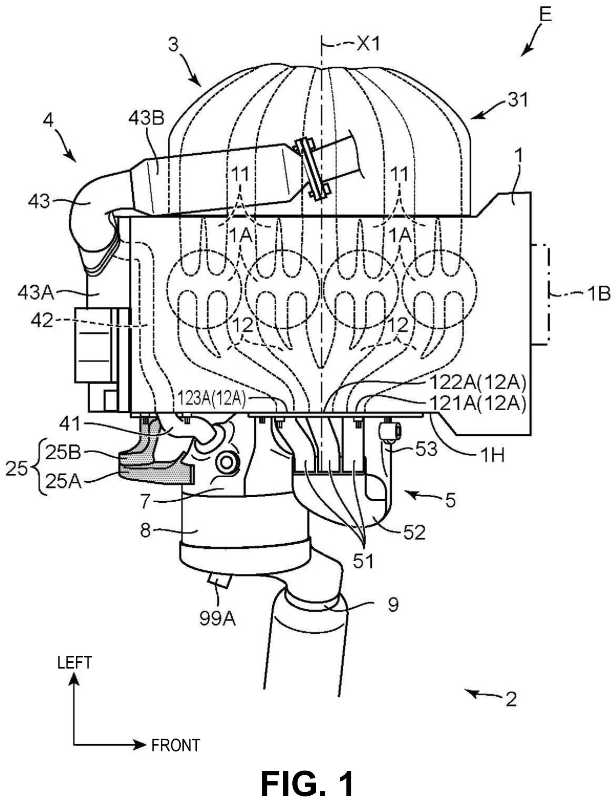

FIG. 1 is a schematic plan view of an engine E to which an exhaust structure for an engine according to one embodiment of the present invention is applied. For example, the engine E of the present embodiment is an inline four cylinder reciprocating engine, and four cylinders 1A arranged in a predetermined direction are formed in an engine body 1. The engine E may be mounted on a vehicle, e.g., an automobile.

A piston (not shown in the drawing) may be fitted in each cylinder 1A and, when air-fuel mixture of fuel and air is combusted in each cylinder 1A, the piston reciprocates in the up-down direction, so that a crankshaft (not shown in the drawing) forming the output shaft of the engine E is rotated. The engine E of the present embodiment may be a gasoline engine, and fuel containing gasoline as a main component is supplied into the respective cylinders 1A. A crank pulley 1B may be attached to one end of the crankshaft in the longitudinal direction.

Hereinafter, the arrangement direction of the cylinders 1A, that is, a cylinder arrangement direction, is referred to as "front-rear direction", the side on which the crank pulley 1B is located (the right side in FIG. 1) is referred to as "front side", and the opposite side of the front side is referred to as "rear side".

The left-right direction orthogonal to the up-down direction and the cylinder arrangement direction (front-rear direction), with the viewer facing the crank pulley 1B (front side), is referred to as "left-right direction".

In the present embodiment, the left-right direction corresponds to "engine width direction" in the present invention, the right side corresponds to "exhaust side", and the left side corresponds to "intake side". As described above, the front-rear direction corresponds to "cylinder arrangement direction" in the present invention, the front side corresponds to "one side" in the cylinder arrangement direction in the present invention, and the rear side corresponds to "the other side".

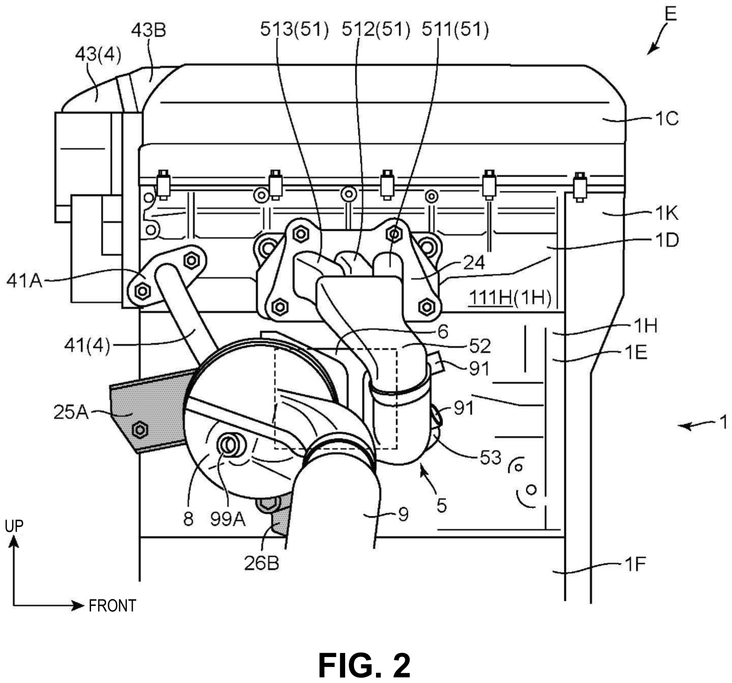

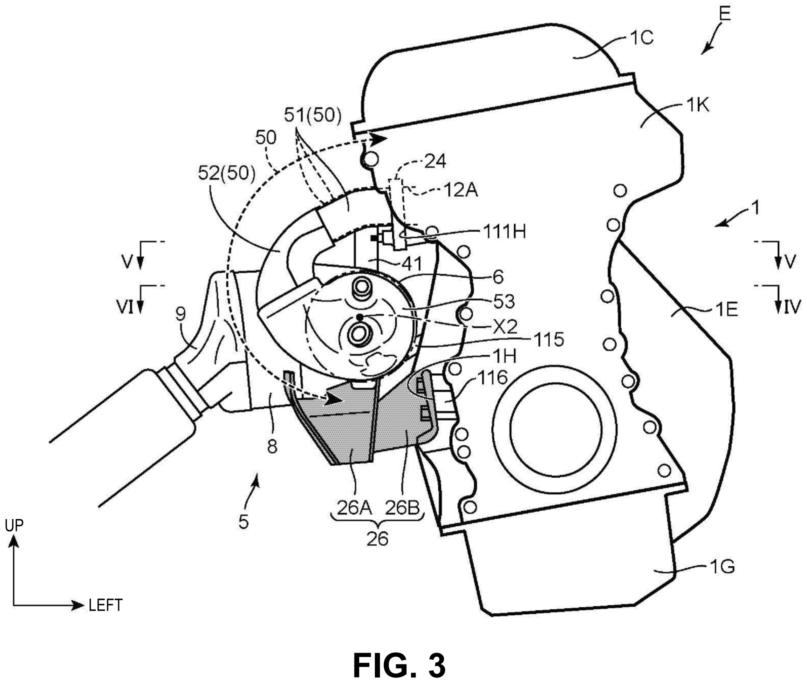

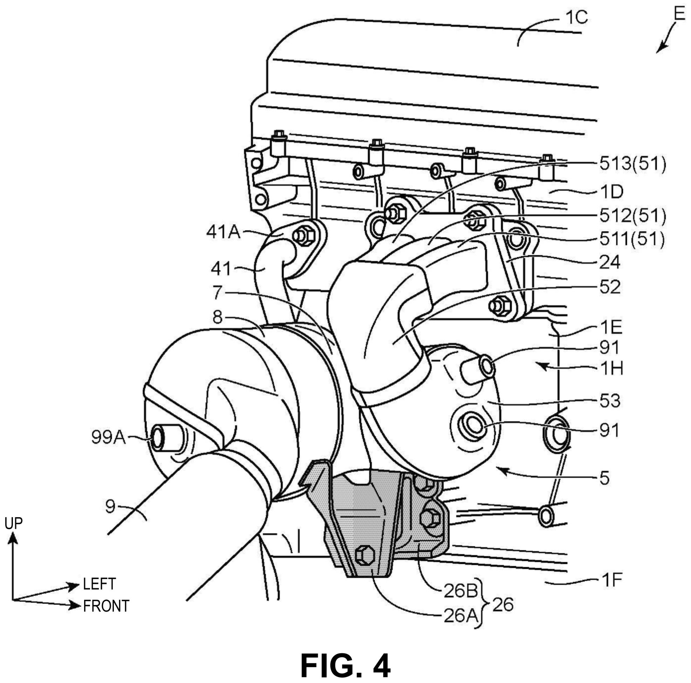

FIG. 2 is a schematic side view of the engine E as viewed from the right side, i.e., the exhaust side. FIG. 3 is a schematic side view of the engine E as viewed from the front side. FIG. 4 is a schematic perspective view showing a portion of the engine E as viewed obliquely from the front right. FIG. 1 to FIG. 4 are diagrams showing a state in which an exhaust cover 22 and an EGR cover 400 described later are removed. In the diagrams in which a rear bracket 25 and a lower bracket 26 described later are shown as in the case of FIG. 1, these brackets 25, 26 are shown in a colored state to improve clarity of the drawing.

As shown in FIG. 1, the engine E includes the engine body 1 and an exhaust passage 2. The engine E may also includes an intake passage 3 and/or an EGR passage 4. In the drawing, only a portion of the EGR passage 4 is shown.

For example, as shown in FIG. 2, the engine body 1 includes a cylinder block 1E, a cylinder head 1D, which covers the upper side of the cylinder block 1E, a head cover 1C, which covers the upper side of the cylinder head 1D, and a crankcase 1F, which covers the lower side of the cylinder block 1E. The cylinders 1A are formed in the cylinder block 1E. As shown in FIG. 3, an oil pan 1G may be attached to the lower surface of the crankcase 1F.

As shown in FIG. 1, the engine body 1 has a plurality of exhaust ports 12 and, optionally, a plurality of intake ports 11. The plurality of exhaust ports 12 extend rightward from the respective cylinders 1A. The plurality of intake ports 11 extend leftward from the respective cylinders 1A. These ports 11, 12 are formed in the cylinder head 1D.

The exhaust ports 12 are open on an exhaust-side surface 1H of the engine body 1. The exhaust-side surface 1H forms the right side surface of the engine body 1. For example, the exhaust ports 12 are open on the exhaust-side surface 1H at a portion formed by the cylinder head 1D, that is, on a right side surface 111H of the cylinder head 1D.

A plurality of opening ends 12A, e.g., three opening ends 12A, of the exhaust ports 12 are formed on the exhaust-side surface 1H. The exhaust ports 12 extending from a plurality of cylinders 1A, e.g., two cylinders 1A, are collected in the engine body 1.

The two cylinders 1A corresponding to the collected exhaust ports 12 may be cylinders in which combustion does not occur continuously. For example, the engine E is controlled such that combustion occurs in sequence in four cylinders 1A at timings shifted by 180°CA, and combustion does not occur continuously between two adjacent cylinders 1A.

In the present embodiment, combustion in the second cylinder 1A and the third cylinder 1A, counted from the front, may not occur continuously, and the exhaust ports 12 of these two cylinders 1A may be collected in the engine body 1 to form one exhaust port 12 opened on the exhaust-side surface 1H.

Hereinafter, the opening end 12A of the exhaust port 12 formed on the exhaust-side surface 1H is referred to as "exhaust port opening end 12A", when appropriate. Each exhaust port 12 may be branched into a plurality of ports, e.g., two ports, on the upstream side in the flow direction of exhaust gas, that is, on the cylinder 1A side, and a plurality of opening ends, i.e., two opening ends, of the exhaust ports 12 are formed on the cylinder side for each cylinder 1A.

A plurality of exhaust port opening ends 12A, e.g., three exhaust port opening ends 12A, are arranged in the front-rear direction. Hereinafter, when appropriate, the exhaust port opening end 12A on the frontmost side is referred to as "first opening end 121A", the exhaust port opening end 12A at the center in the front-rear direction is referred to as "second opening end 122A", and the exhaust port opening end 12A on the rearmost side is referred to as "third opening end 123A".

The three exhaust port opening ends 12A may be disposed at positions close to each other in the front-rear direction. In the present embodiment, the three exhaust port opening ends 12A may be formed within a range occupied, in the front-rear direction, by two cylinders 1A (the second cylinder 1A and the third cylinder 1A, counted from the front) provided at the center.

For example, when a line passing through a point and extending in the left-right direction is taken as a center line X1, the second opening end 122A is provided on the center line X1, the point being located at the center of a region of four cylinders 1A in the front-rear direction, and being located at the center of two cylinders 1A in the front-rear direction, the two cylinders 1A being provided at the center.

The first opening end 121A may be provided forward or slightly forward of the center line X1. The third opening end 123A may be provided rearward or slightly rearward of the center line X1. In the present embodiment, the center line X1 may substantially align with a line passing through the center of the engine body 1 (the cylinder head 1D) and the exhaust-side surface 1H in the front-rear direction, and extending in the left-right direction, and the three exhaust port opening ends 12A may be formed at the center portion of the exhaust-side surface 1H in the front-rear direction.

The first opening end 121A is the opening end of the exhaust port 12 that is in communication with the cylinder 1A disposed on the frontmost side, and this exhaust port 12 may be bent or significantly bent obliquely toward the rear-right direction from the cylinder 1A. The second opening end 122A is the opening end of the exhaust port 12 that is in communication with the second and third cylinders 1A counted from the front, the exhaust port 12 extending from the second cylinder 1A counted from the front extends obliquely to the rear right from this cylinder 1A toward the second opening end 122A, and the exhaust port 12 extending from the third cylinder 1A counted from the front extends obliquely to the front right from this cylinder 1A toward the second opening end 122A. The third opening end 123A is the opening end of the exhaust port 12 that is in communication with the cylinder 1A disposed on the rearmost side, and this exhaust port 12 may be bent or significantly bent obliquely toward the front-right direction from the cylinder 1A.

The exhaust passage 2 is mounted on the exhaust-side surface 1H in a state of being in communication with the respective exhaust port opening ends 12A. The structure of the exhaust passage 2 will be described later.

For example, the intake ports 11 are open on the left side surface of the engine body 1. The intake passage 3 includes an intake manifold 31 for distributing intake air to the respective cylinders 1A. The intake passage 3 is fixed to the right side surface of the engine body 1 in a state in which the intake manifold 31 is in communication with the opening ends of the respective intake ports 11. The illustration of a portion of the intake passage 3, which is located upstream of the intake manifold 31 in the flow direction of intake air, is omitted.

The EGR passage 4 is a passage for refluxing EGR gas, being a portion of exhaust gas flowing through the exhaust passage 2, to the intake passage 3, and connects the exhaust passage 2 to the intake passage 3. The halfway portion of the EGR passage 4 may be formed in the engine body 1. That is, the EGR passage 4 includes a second EGR passage 42, a first EGR passage 41, and a third EGR passage 43, the second EGR passage 42 being formed in the engine body 1, the first EGR passage 41 connecting the second EGR passage 42 to the exhaust passage 2, the third EGR passage 43 connecting the second EGR passage 42 to the intake passage 3. Hereinafter, the flow direction of EGR gas flowing from the exhaust passage 2 toward the intake passage 3 is simply referred to as "flow direction of EGR gas" when appropriate.

The second EGR passage 42 may be formed in the cylinder head 1D. As shown in FIG. 1, the second EGR passage 42 is formed at the rear end portion of the cylinder head 1D in such a way as to extend in the left-right direction. The end portion of the second EGR passage 42 on the right side, that is, the end portion on the upstream side in the flow direction of EGR gas, is open on the exhaust-side surface 1H at a portion formed by the cylinder head 1D, that is, at the rear end portion of the right side surface 111H of the cylinder head 1D. The left end portion of the second EGR passage 42, that is, the end portion on the downstream side in the flow direction of EGR gas, is open at the left end portion of the rear surface of the cylinder head 1D.

For example, as shown in FIG. 2 and the like, the first EGR passage 41 is disposed to the right of the right side surface 111H of the cylinder head 1D, and is in communication with the opening end of the second EGR passage 42 on the upstream side in the flow direction of EGR gas, this opening end of the second EGR passage 42 being formed on the right side surface 111H. The first EGR passage 41 connects this opening end of the second EGR passage 42 on the upstream side to a second connecting passage 7 described later of the exhaust passage 2.

The second connecting passage 7 may be located at the position lower than the opening end of the second EGR passage 42 on the upstream side. The second EGR passage 42 has the upper end thereof being in communication with the opening end of the second EGR passage 42 on the upstream side, extends downward from this opening end, and has the lower end portion thereof connected to the second connecting passage 7. For example, as shown in FIG. 1, FIG. 4, and the like, the first EGR passage 41 extends rightward from the above-mentioned opening end and, thereafter, extends obliquely toward the lower front.

An EGR mounting member 43A having a block shape may be mounted on the rear surface of the cylinder head 1D, a passage that is in communication with the second EGR passage 42 being formed in the EGR mounting member 43A. The third EGR passage 43 is coupled to the EGR mounting member 43A in a state of being in communication with this passage formed in the EGR mounting member 43A.

The third EGR passage 43 extends upward from the EGR mounting member 43A and, thereafter, extends forward, and is connected to the portion (not shown in the drawing) of the intake passage 3, which is located upstream of the intake manifold 31 in the flow direction of intake air. An EGR cooler 43B for cooling EGR gas is provided at the halfway portion of the third EGR passage 43.

### (Detailed structure of exhaust passage)

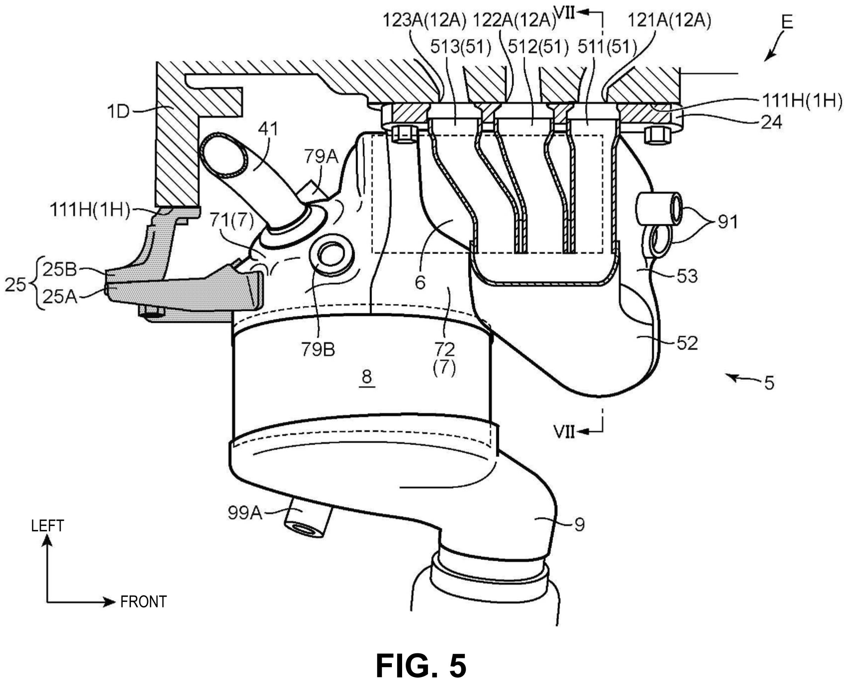

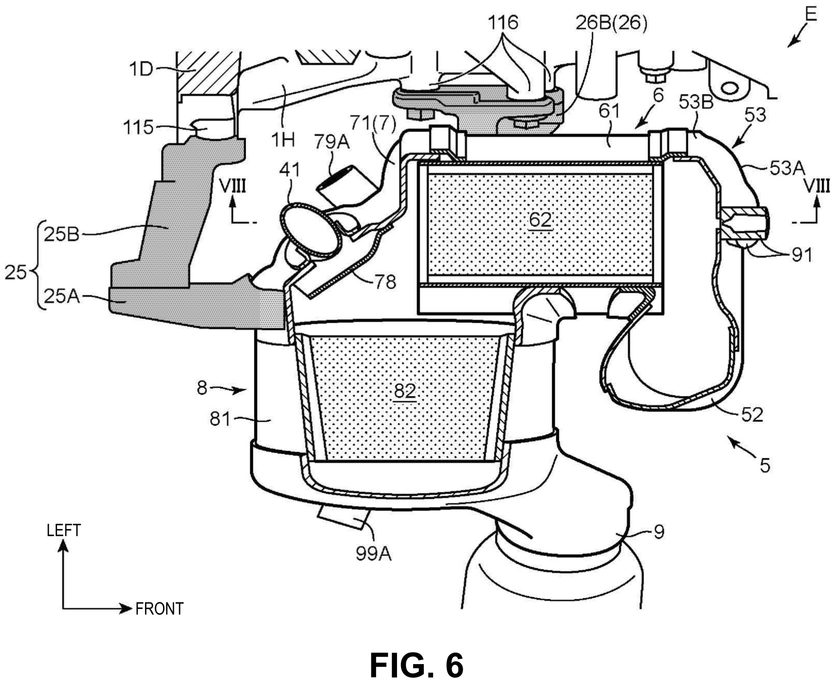

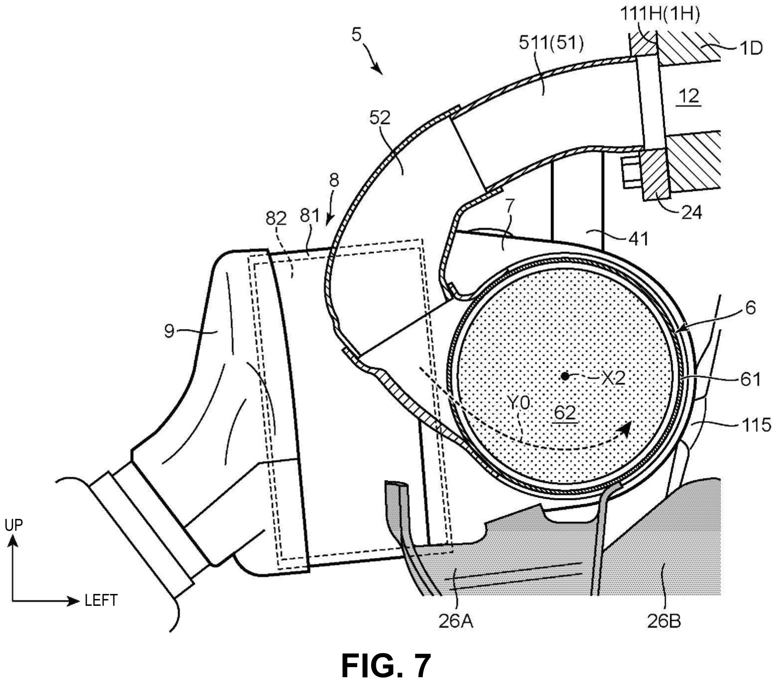

Next, the detailed structure of the exhaust passage 2 will be described. FIG. 5 is a cross-sectional view showing, in an enlarged manner, a portion of the cross section taken along line V-V in FIG. 3. FIG. 6 is a cross-sectional view showing, in an enlarged manner, a portion of the cross section taken along line VI-VI in FIG. 3. FIG. 7 is a cross-sectional view showing, in an enlarged manner, a portion of the cross section taken along line VII-VII in FIG. 5. In the following description for the exhaust passage 2, the upstream side and the downstream side in the flow direction of exhaust gas are simply referred to as "upstream side" and "downstream side" respectively, when appropriate.

The exhaust passage 2 includes a catalyst device 6 and, optionally, a filter 8. The filter 8 is provided downstream of the catalyst device 6.

For example, the exhaust passage 2 includes a first connecting passage 5, the second connecting passage 7, and a third connecting passage 9, the first connecting passage 5 connecting the respective exhaust port opening ends 12A to the upstream end of the catalyst device 6, the second connecting passage 7 connecting the downstream end of the catalyst device 6 to the upstream end of the filter 8, the third connecting passage 9 extending toward the downstream side from the downstream end of the filter 8.

The catalyst device 6 is a device that purifies exhaust gas by the action of the catalyst. As shown in FIG. 6 and the like, the catalyst device 6 may have a substantially cylindrical shape. For example, the catalyst device 6 includes a catalyst case 61 and a catalyst body 62, the catalyst case 61 having a substantially cylindrical shape, the catalyst body 62 being disposed in the catalyst case 61, and having a substantially circular columnar shape. In the present embodiment, the catalyst body 62 may be a monolithic catalyst converter, and/or a three-way catalyst may be supported on the catalyst body 62.

The catalyst device 6 is disposed to the right of the exhaust-side surface 1H e.g., in an attitude extending in the front-rear direction (for example, in an attitude in which the center axis of the catalyst device 6 extends in the front-rear direction). As shown in FIG. 2 and the like, the catalyst device 6 may be disposed at a position lower than the exhaust port opening ends 12A, that is, at a height position lower than the exhaust port opening ends 12A, and is disposed to the right of the right side surface of the cylinder block 1E, the right side surface of the cylinder block 1E forming a portion of the exhaust-side surface 1H. As shown in FIG. 3 and the like, in the present embodiment, the catalyst device 6 may be disposed at a position close to the exhaust-side surface 1H.

The first connecting passage 5 is in communication with the front end surface of the catalyst device 6, and connects the front end of the catalyst device 6 to the respective exhaust port opening ends 12A. The second connecting passage 7 is in communication with the rear end surface of the catalyst device 6, and connects the rear end of the catalyst device 6 to the filter 8.

Exhaust gas that passes through the first connecting passage 5 flows into the catalyst device 6 from the front end surface of the catalyst device 6, and is led out to the second connecting passage 7 from the rear end surface of the catalyst device 6. As described previously, in the present embodiment, the front end of the catalyst device 6 forms the upstream end of the catalyst device 6, and the rear end of the catalyst device 6 forms the downstream end of the catalyst device 6.

The filter 8 is a device that captures fine particles in exhaust gas, thereby purifying the exhaust gas. As described above, the engine E of the present embodiment is a gasoline engine, and the filter 8 may be a so-called GPF (Gasoline Particulate Filter).

As shown in FIG. 6 and the like, the filter 8 may have a substantially circular columnar shape. For example, the filter 8 includes a filter case 81 and a filter body 82, the filter case 81 having a substantially cylindrical shape, the filter body 82 being disposed in the filter case 81, and having a substantially circular columnar shape.

In the present embodiment, the filter body 82 may be formed of a ceramic filter having a honeycomb structure. As shown in FIG. 3 and the like, the filter 8 is disposed to the right of the exhaust-side surface 1H and/or obliquely behind and to the right of the catalyst device 6 in an attitude extending in the left-right direction (for example, in an attitude in which the center axis of the filter 8 extends in the left-right direction). The filter 8 is disposed at a position lower than the exhaust port opening ends 12A, that is, at a height position lower than the exhaust port opening ends 12A.

As shown in FIG. 6 and the like, in the front-rear direction, the filter 8 may be disposed in a region ranging from the vicinity of the center of the catalyst device 6 in the front-rear direction to a position rearward of the catalyst device 6. As shown in FIG. 7 and the like, the height position of the filter 8 is equal or substantially equal to the height position of the catalyst device 6. Thus, the front portion of the filter 8 overlaps with the rear portion of the catalyst device 6 in the left-right direction. In the present embodiment, the substantially front half of the filter 8 and the substantially rear half of the catalyst device 6 may overlap with each other when viewed in the left-right direction, that is, when viewed along the left-right direction.

The second connecting passage 7 is in communication with the left end surface of the filter 8, and the third connecting passage 9 is in communication with the right end surface of the filter 8. Exhaust gas that passes through the second connecting passage 7 flows into the filter 8 from the left end surface of the filter 8, and is led out to the third connecting passage 9 from the right end surface of the filter 8. As described previously, in the present embodiment, the left end of the filter 8 forms the upstream end of the filter 8, and the right end of the filter 8 forms the downstream end of the filter 8.

### (First connecting passage)

The engine E or the first connecting passage 5 includes a plurality of independent passages 51, a collecting passage 52, and a swirling part 53. As described above, the first connecting passage 5 is a passage that connects the respective exhaust port opening ends 12A to the catalyst device 6. The catalyst device 6 may be disposed at the position lower than the respective exhaust port opening ends 12A. Thus, the first connecting passage 5 may extend upward from the catalyst device 6. As shown in FIG. 3 and the like, in the present embodiment, a portion of the downstream portion of the collecting passage 52 may be integrally formed with the swirling part 53.

The respective independent passages 51 are passages individually extending from the respective exhaust port opening ends 12A, and are fixed to the exhaust-side surface 1H in a state of being in communication with the respective exhaust port opening ends 12A. In the present embodiment, e.g., three independent passages 51 are provided in the exhaust passage 2 such that the three independent passages 51 correspond to the three exhaust port opening ends 12A. For example, as shown in FIG. 5 and the like, the exhaust passage 2 includes, as the independent passages 51, a first independent passage 511 connected to the first opening end 121A, a second independent passage 512 connected to the second opening end 122A, and a third independent passage 513 connected to the third opening end 123A. The three independent passages 511 to 513 may have the same or substantially the same cross sectional shape, and may have a rectangular shape or a substantially rectangular shape extending in the up-down direction.

The three independent passages 51 (511 to 513) extend rightward from the corresponding opening ends 12A (121A to 123A), and these independent passages 51 (511 to 513) are arranged in the front-rear direction. As described above, the three exhaust port opening ends 12A (121A to 123A) may be formed at the center portion of the exhaust-side surface 1H in the front-rear direction. Due to this, the three independent passages 51 (511 to 513) extending from the respective exhaust port opening ends 12A (121A to 123A) are disposed close to each other at a position that faces the center portion of the exhaust-side surface 1H in the front-rear direction. For example, in the present embodiment, as shown in FIG. 5 and the like, a gap dimension between the respective independent passages 51 (511 to 513) in the front-rear direction is set to a dimension smaller than the dimension of each of these independent passages 51 (511 to 513) in the front-rear direction.

In the embodiment, as shown in FIG. 5 and the like, the first independent passages 511 may extend straight or substantially straight toward the right from the first opening end 121A when viewed in a plan view (that is, when viewed along the up-down direction). Although the upstream portions, that is, the left portions, of the second independent passage 512 and the third independent passage 513 are inclined or slightly inclined obliquely toward the front right from the corresponding opening ends 122A, 123A when viewed in a plan view, the downstream portions, that is, the right side portions, of the second independent passage 512 and the third independent passage 513 extend substantially straight in the left-right direction when viewed in a plan view.

The inclination angle of the upstream portion of the second independent passage 512 relative to the left-right direction may be smaller than the inclination angle of the upstream portion of the third independent passage 513. As described previously, the upstream portions of the three independent passages 511 to 513 have different inclination angles relative to the left-right direction. However, this difference is small, and the three independent passages 511 to 513 may be arranged side by side at positions close to each other in an attitude in which the three independent passages 511 to 513 are nearly parallel to each other.

As shown in FIG. 3, FIG. 4, and the like, the three independent passages 51 (511 to 513) may be configured to have substantially the same shape, and to pass through substantially the same position, when viewed in the front-rear direction. Thus, almost all of the three independent passages 51 (511 to 513) overlap with each other when viewed in the front-rear direction.

As shown in FIG. 3, FIG. 4, and the like, the three independent passages 51 (511 to 513) are bent in such a way as to bulge in the right-upward direction from the exhaust port opening ends 12A (121A to 123A) and to extend obliquely toward the lower right. That is, these independent passages 51 (511 to 513) are bent to extend along an arc about a point located below the exhaust port opening ends 12A (121A to 213A), when viewed in the front-rear direction.

The catalyst device 6 may be disposed below the three independent passages 51 (511 to 513) and, as shown in FIG. 5 and the like, the catalyst device 6 may overlap with the three independent passages 51 (511 to 513) when viewed in a plan view or when viewed from above. In the present embodiment, almost all of the three independent passages 51 (511 to 513) overlap with the catalyst device 6.

For example, the position of the front end of the first independent passage 511 is located slightly forward of the position of the front end of the catalyst device 6, the position of the rear end of the third independent passage 513 is located forward of the rear end of the catalyst device 6 by approximately 1/3 of the entire length of the catalyst device 6, and the three independent passages 51 (511 to 513) overlap with a portion of the catalyst device 6, the portion starting from the front side of the catalyst device 6, and being approximately 2/3 of the entire length of the catalyst device 6. As shown in FIG. 5 and the like, a gap dimension between the respective independent passages 51 (511 to 513) in the front-rear direction is smaller than the dimension of each of these independent passages 51 (511 to 513) in the front-rear direction.

As shown in FIG. 3 and the like, the collecting passage 52 connects the three independent passages 51 to the swirling part 53, which may be located below these three independent passages 51. The collecting passage 52 is commonly connected to the downstream ends of the three independent passages 51, and extends downward from these downstream ends.

As shown in FIG. 5, one passage may be formed in the collecting passage 52, and exhaust gas that passes through the three independent passages 51 may be collected in the collecting passage 52. The cross section of the upper end, that is, the upstream end, of the collecting passage 52 may have a rectangular shape or a substantially rectangular shape extending in the front-rear direction.

In contrast, as shown in FIG. 6, the cross section of the downstream portion of the collecting passage 52 may have a circular shape or a substantially circular shape. The dimension of the collecting passage 52 in the front-rear direction gradually decreases toward the downstream side, and the dimension of the collecting passage 52 in the left-right direction gradually increases toward the downstream side.

As shown in FIG. 3, an upstream-side passage 50 is a passage formed of the three independent passages 51 and the collecting passage 52, and is bent in such a way as to bulge toward the right and to extend downward, when viewed in the front-rear direction. For example, the collecting passage 52 is bent in such a way as to bulge toward the right.

When the collecting passage 52 and the independent passages 51 are viewed in the front-rear direction, the curvature of the collecting passage 52 may be equal or substantially equal to the curvature of each independent passage 51. The downstream ends of the respective independent passages 51 are open obliquely toward the lower right, and the upstream end of the collecting passage 52 is open obliquely toward the upper left.

When the collecting passage 52 and the independent passages 51 are viewed in the front-rear direction, the tangent to the upstream end of the collecting passage 52 may align or substantially align with the tangent to the downstream ends of the respective independent passages 511 to 513. Thus, when viewed in the front-rear direction, the three independent passages 51 are smoothly connected to the collecting passage 52, and the upstream-side passage 50, as a whole, is smoothly bent in such a way as to bulge toward the right from the exhaust port opening ends 12A and to extend downward.

The swirling part 53 connects the upstream end of the catalyst device 6 to the downstream end of the collecting passage 52. As shown in FIG. 6, the swirling part 53 may be provided in front of the catalyst device 6, and may cover the front end surface of the catalyst device 6 from the front.

For example, as shown in FIG. 3 and the like, the swirling part 53 has a circular shape or a substantially circular shape when viewed in the front-rear direction (that is, when viewed along the front-rear direction), and has an inner peripheral surface having a circular shape or a substantially circular shape when viewed in the front-rear direction. In the present embodiment, a center axis X2 of the swirling part 53, the center axis X2 extending in the front-rear direction, may align or substantially align with a center axis X2 of the catalyst device 6, the center axis X2 extending in the front-rear direction.

Further, the outer diameter of the swirling part 53 may be equal to or substantially equal to the outer diameter of the catalyst device 6, and the swirling part 53 may have a bowl shape or a substantially bowl shape extending forward from the outer peripheral edge of the front end portion of the catalyst device 6. For example, the swirling part 53 includes a front end surface 53A and an outer peripheral portion 53B, the front end surface 53A forming the front end surface of the swirling part 53, and having a substantially circular shape when viewed in the front-rear direction, the outer peripheral portion 53B extending in the front-rear direction between the outer peripheral edge of the front end surface 53A and the outer peripheral edge of the front end portion of the catalyst device 6, the diameter of the outer peripheral portion 53B gradually increasing toward the rear side.

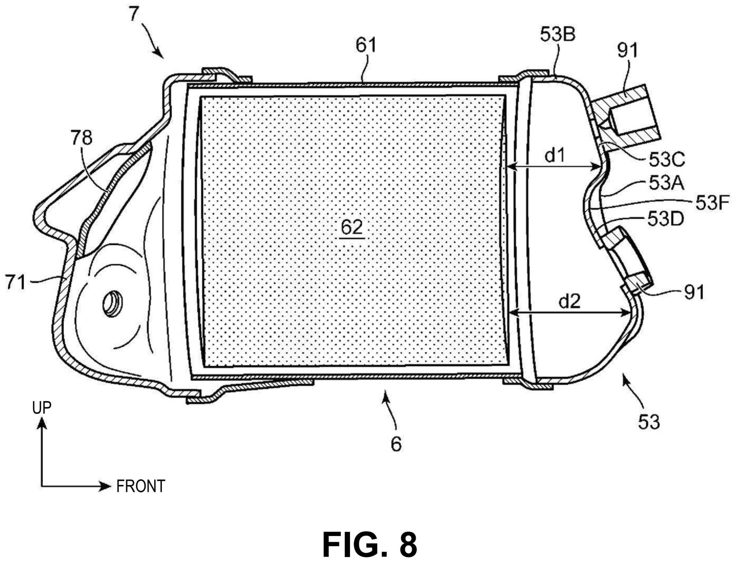

FIG. 8 is a cross-sectional view taken along line VIII-VIII in FIG. 6, and is a cross-sectional view of the swirling part 53 taken along the plane extending in the front-and-rear direction and the up-down direction along the center axis X2 of the swirling part 53. In the cross section shown in FIG. 8, with regard to the separation distance between the inner peripheral surface of the swirling part 53 (to be more specific, the rear surface of the front end surface 53A) and a front end surface 6A of the catalyst device 6 in the front-rear direction, the separation distance at an upper area (d1) may be smaller than that of at a lower area (d2), the upper area being located above the center axis X2, the lower area being located below the center axis X2. For example, a bulging part 53F, which slightly bulges rearward, is formed in the vicinity of the center of the front end surface 53A, and the maximum value of the above-mentioned separation distance d1 for an upper part 53C is set to a dimension smaller than the minimum value of the above-mentioned separation distance for a lower part 53D, the upper part 53C being located above the bulging part 53F of the swirling part 53, the lower part 53D being located below the bulging part 53F.

Both the upper part 53C and the lower part 53D may be inclined obliquely toward the lower front, the upper part 53C being located above the bulging part 53F of the swirling part 53, the lower part 53D being located below the bulging part 53F of the swirling part 53. The swirling part 53, as a whole, is inclined obliquely toward the lower front.

Mounting parts 91, 91 for mounting sensors may be provided to the upper part 53C and the lower part 53D, the upper part 53C being located above the bulging part 53F of the swirling part 53, the lower part 53D being located below the bulging part 53F of the swirling part 53. For example, in the present embodiment, an O2 sensor is mounted on the upper mounting part 91, and a temperature sensor is mounted on the lower mounting part 91. As described above, the respective parts 53C, 53D are inclined obliquely toward the lower front, and the respective mounting parts 91 extend obliquely toward the upper front from the front end surface 53A.

The swirling part 53 is configured to cause, in the inside thereof, exhaust gas to swirl about an axis extending in the front-rear direction.

For example, the downstream end of the collecting passage 52, that is, the downstream end of the upstream-side passage 50, is in communication with the lower portion of the right side surface of the swirling part 53. In the present embodiment, a region of the right side surface of the swirling part 53 is in communication with the downstream end of the upstream-side passage 50, the region ranging from the position of the lower end of the right side surface of the swirling part 53 to the position located below the upper end of the right side surface of the swirling part 53 by a length corresponding to approximately 1/4 of the diameter of the swirling part 53.

As described previously, the upstream-side passage 50 extends rightward from the lower portion of the right side surface of the swirling part 53, and is bent in such a way as to bulge toward the right as described above. Thus, when viewed in the front-rear direction, the upstream-side passage 50 is smoothly connected to the swirling part 53, and the upstream-side passage 50 extends into a substantially arc shape along the inner peripheral surface of the lower portion of the swirling part 53, that is, along the inner peripheral surface in the vicinity of the connection portion between the swirling part 53 and the collecting passage 52.

As described above, the downstream end of the upstream-side passage 50 (the downstream end of the collecting passage 52) is in communication with the lower portion of the swirling part 53 and hence, exhaust gas that passes through the upstream-side passage 50 is introduced into the lower portion of the swirling part 53. Thus, as shown by an arrow Y0 in FIG. 7, the exhaust gas flows into the swirling part 53 along the inner peripheral surface of the lower portion of the swirling part 53, and swirls about the center axis X2 of the swirling part 53 along this inner peripheral surface.

### (Second connecting passage)

As shown in FIG. 5 and the like, the second connecting passage 7, as a whole, may extend obliquely to the rear right from the downstream portion, that is, the rear portion, of the catalyst device 6 toward the left end surface of the filter 8, and/or may connect the rear portion of the catalyst device 6 to the left end portion of the filter 8. As shown in FIG. 6 and the like, the downstream portion of the catalyst device 6 may be inserted into the second connecting passage 7, the downstream portion including the downstream end of the catalyst device 6 and a portion located upstream of this downstream end. The second connecting passage 7 connects the catalyst device 6 to the filter 8 with the downstream portion of the catalyst device 6 housed in the second connecting passage 7.

For example, as shown in FIG. 5, FIG. 6, and the like, the rear portion of the second connecting passage 7 (hereinafter referred to as "second connecting rear portion 71" when appropriate) extends from the rear portion of the outer peripheral edge of the upstream end (left end) of the filter 8 toward the downstream end (rear end) of the catalyst device 6, and covers the rear portion of the filter 8 from the left, and covers the catalyst device 6 from the rear. The second connecting rear portion 71 has an approximately 1/4 spherical shape (a shape obtained by further halving a hemisphere along the plane passing through the center) and, when viewed in a plan view, the rear edge of the second connecting rear portion 71 is inclined obliquely toward the rear right.

The front portion of the second connecting passage 7 (hereinafter referred to as "second connecting front portion 72" when appropriate) may extend rightward from the outer peripheral surface of the catalyst device 6 toward the front portion of the filter 8. As shown in FIG. 6, the second connecting front portion 72 connects the outer peripheral surface of a portion of the catalyst device 6 to the upstream end (left end) of the filter 8, the portion being located forward (upstream) of the rear end (downstream end) of the catalyst device 6. A portion of the filter 8 and a portion of the catalyst device 6 that overlap with each other when viewed in the left-right direction, for example, the front portion of the filter 8 and the rear portion of the catalyst device 6, face each other in the left-right direction in the second connecting front portion 72.

In the left-right direction, the amount of the second connecting passage 7 extending rightward from the catalyst device 6 may be small, and the filter 8, which is disposed downstream of the second connecting passage 7, may be close to the catalyst device 6. Due to this, as shown in FIG. 7, the filter 8 overlaps with the collecting passage 52 when viewed in the front-rear direction. In the present embodiment, the left upper portion of the filter 8 overlaps with the downstream portion of the upstream-side passage 50 when viewed in the front-rear direction.

The lower end portion (the upstream end in the flow direction of EGR gas) of the first EGR passage 41 may be connected to the rear surface of the second connecting passage 7, and the first EGR passage 41 extends upward from this rear surface. In the present embodiment, a portion of exhaust gas that passes through the catalyst device 6 and is introduced into the second connecting passage 7 is refluxed, as EGR gas, to the intake passage 3 through the first EGR passage 41 and the EGR passage 4.

As shown in FIG. 6, in the present embodiment, a shielding plate 78 may be provided in the second connecting passage 7 at a position that faces the lower end portion of the first EGR passage 41. The shielding plate 78 is provided to prevent metal powder and the like contained in exhaust gas from flowing into the EGR passage 4, that is, to prevent occurrence of so-called contamination in the EGR passage 4, and the shielding plate 78 is configured to cause exhaust gas led out from the catalyst device 6 to flow into the first EGR passage 41 while routing around the shielding plate 78.

For example, the shielding plate 78 has a plate shape extending parallel or substantially parallel to the rear surface of the second connecting passage 7 and, at a position upstream (in the flow direction of exhaust gas) of a position that faces the downstream end of the first EGR passage 41, the shielding plate 78 is fixed to the inner peripheral surface of the second connecting passage 7 in a state of being in contact with the inner peripheral surface of the second connecting passage 7. A cylindrical member 79A shown in FIG. 5 and the like and provided to the second connecting passage 7 is a member to which a pipe is mounted, the pipe guiding exhaust gas to a differential pressure sensor. An opening portion to which reference symbol "79B" is given, and that is formed in the second connecting passage 7 is an opening portion for mounting a sensor.

### (Third connecting passage)

As shown in FIG. 1 and the like, the third connecting passage 9 may extend rightward from the right end portion of the filter 8. In the present embodiment, the third connecting passage 9 extends or slightly extends rightward from the right end portion of the filter 8 and, thereafter, extends obliquely toward the front right, and then extends rightward. As shown in FIG. 5, a cylindrical member 99A for mounting a pipe may also be provided to the third connecting passage 9 in the same manner as the second connecting passage 7, the pipe guiding exhaust gas to the differential pressure sensor.

### (Cover member)

In the present embodiment, the first connecting passage 5, the catalyst device 6, the second connecting passage 7, and the filter 8 may be integrally covered by the exhaust cover 22. The first EGR passage 41 is surrounded by the EGR cover 400. Hereinafter, these covers 22, 400 will be described.

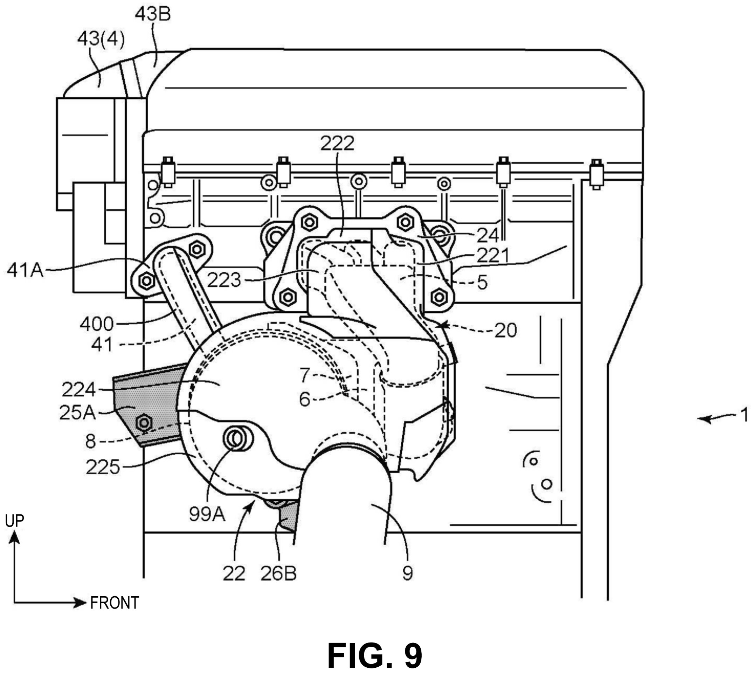

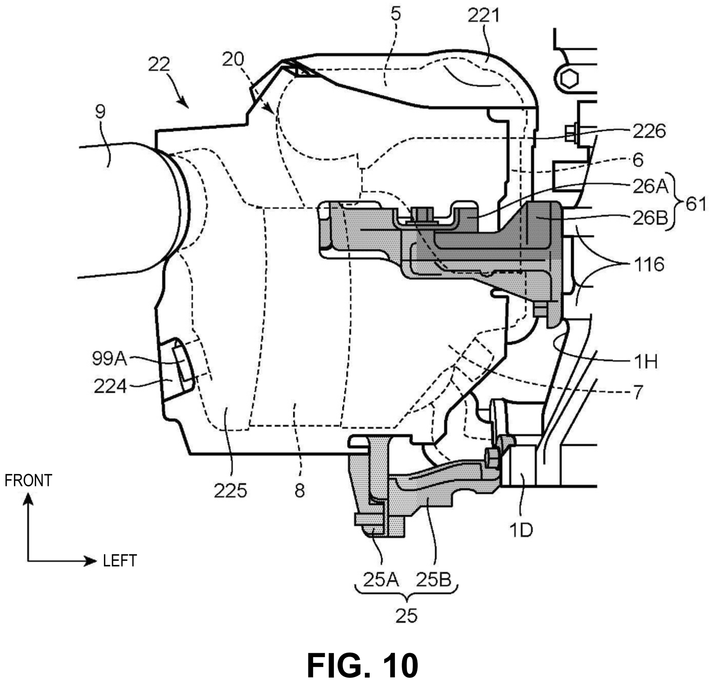

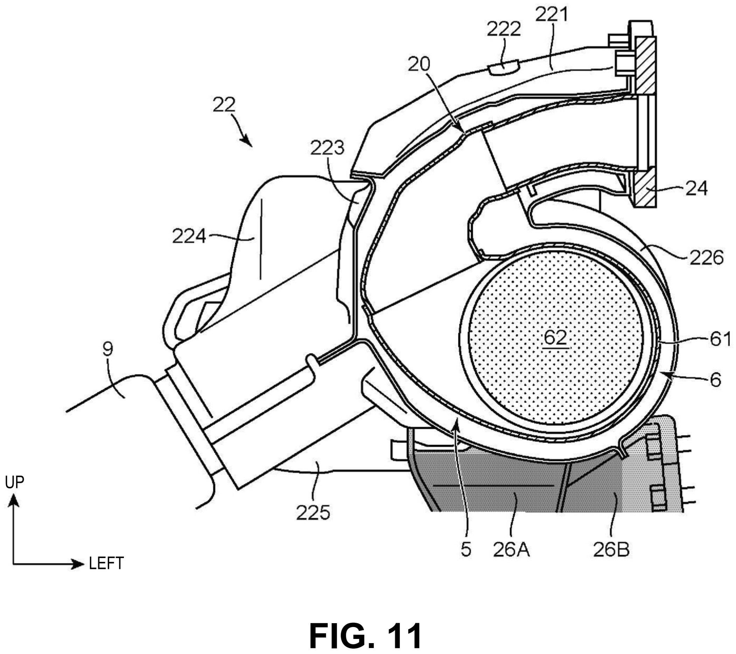

FIG. 9 is a diagram corresponding to FIG. 2, and is a schematic side view of the engine E with the exhaust cover 22 and the EGR cover 400 attached. FIG. 10 is a diagram showing, in an enlarged manner, a portion of the bottom view of the engine E with the exhaust cover 22 and the EGR cover 400 attached. FIG. 11 is a diagram showing, in an enlarged manner, a portion of the cross section taken along line VII-VII in FIG. 5, and an area around the line VII-VII, and is a cross-sectional view of the engine with the exhaust cover 22 and the EGR cover 400 attached.

The exhaust cover 22 may cover at least partially or substantially all of the upstream-side passage 50 (the first connecting passage 5 and the swirling part 53), the catalyst device 6, the second connecting passage 7, and the filter 8, and/or may cover a portion of the third connecting passage 9 which is located in the vicinity of the upstream end of the third connecting passage 9. Hereinafter, when appropriate, the upstream-side passage 50, the catalyst device 6, the second connecting passage 7, the filter 8, and the portion of the third connecting passage 9 which is covered by the exhaust cover 22 and which is located in the vicinity of the upstream end of the third connecting passage 9 are referred to as "exhaust module 20".

The exhaust cover 22 may have a shape extending or substantially extending along the outer surface of the exhaust module 20. As will be described later, brackets are mounted on the exhaust module 20, the brackets allowing exhaust module 20 to be supported on the engine body 1. The exhaust cover 22 covers the entire region or substantially the entire region of the outer surface of the exhaust module 20, excluding the portions at which the above-mentioned sensors, such as the O2 sensor, are mounted, and the portions at which the brackets are mounted.

The exhaust cover 22 may be constituted of a plurality of cover members. In the present embodiment, the exhaust cover 22 is constituted of six cover members (a first cover 221, a second cover 222, a third cover 223, a fourth cover 224, a fifth cover 225, and a sixth cover 226).

As shown in FIG. 9 and FIG. 10, the first cover 221 may mainly cover the front portion of the first connecting passage 5 from the top, the bottom, and the front. The second cover 222 may be disposed behind the first cover 221, and may mainly cover the left portion of the rear portion of the first connecting passage 5 from the top and the rear.

The third cover 223 may be disposed at a position behind the first cover 221 and to the right of the second cover 222, and may mainly cover the right portion of the rear portion of the first connecting passage 5 from the top and the rear. The fourth cover 224 may be disposed at a position to the right of and behind the third cover 223, and may cover the rear portion of the catalyst device 6 and the second connecting passage 7 from the top, and may cover the filter 8 and the portion of the third connecting passage 9 which is located in the vicinity of the upstream end of the third connecting passage 9 from the top, the right, and the front.

As shown in FIG. 10, the fifth cover 225 may cover the entire or substantially the entire exhaust module 20 from the bottom. The sixth cover 226 may be disposed between the fifth cover 225 and the second and third covers 222, 223 and, as shown in FIG. 11, may mainly cover the catalyst device 6 from the left, and covers the upstream portion of the first connecting passage 5 from the bottom. The adjacent covers 221 to 226 are coupled to each other and, as described above, the entire or substantially the entire exhaust module 20 is covered by these first to sixth covers 221 to 206.

As shown in FIG. 9, the EGR cover 400 may have a cylindrical shape that allows the EGR cover 400 to house the first EGR passage 41 therein. In the present embodiment, the entire or substantially the entire first EGR passage 41 is covered by the EGR cover 400.

### (Support structure)

The exhaust module 20 may be supported on the cylinder head 1D by the first connecting passage 5 and the first EGR passage 41, which are included in the exhaust module 20. The exhaust module 20 may also be supported on the cylinder block 1E by the rear bracket 25 and the lower bracket 26. Hereinafter, the support structure of the exhaust module 20 will be described.

For example, as shown in FIG. 5, the upstream ends of the three independent passages 51 are coupled to each other by an independent passage mounting flange 24. The independent passage mounting flange 24 may have a plate shape.

The respective independent passages 51 are fixed to the independent passage mounting flange 24 in an attitude extending in the plate thickness direction of the independent passage mounting flange 24. For example, the upstream ends of the respective independent passages 51 are fixed by welding to the independent passage mounting flange 24. The independent passage mounting flange 24 may be fixed to the right side surface 111H of the cylinder head 1D with bolts, and the three independent passages 51 may be fixed to the right side surface 111H of the cylinder head 1D via the independent passage mounting flange 24.

As described previously, in the present embodiment, the three independent passages 51, that is, the first connecting passage 5, are fixed to the right side surface 111H of the cylinder head 1D, so that the exhaust module 20 is supported on the cylinder head 1D. The independent passage mounting flange 24 is fixed to the right side surface 111H of the cylinder head 1D at a position near the center in the front-rear direction.

As described above, the lower end portion of the first EGR passage 41 may be connected to the rear surface of the second connecting passage 7. For example, the lower end portion of the first EGR passage 41 is fixed by welding to the rear surface of the second connecting passage 7.

As shown in FIG. 4 and the like, an EGR mounting flange 41A having a plate shape may be fixed to the upper end portion of the first EGR passage 41. The first EGR passage 41 may be fixed to the EGR mounting flange 41A in an attitude extending from the EGR mounting flange 41A in the plate thickness direction of the EGR mounting flange 41A.

For example, the upper end portion of the first EGR passage 41 is fixed by welding to the EGR mounting flange 41A. The EGR mounting flange 41A is fixed to the right side surface 111H of the cylinder head 1D with bolts.

Consequently, the first EGR passage 41 is supported on the right side surface 111H of the cylinder head 1D and, as a result, the exhaust module 20 is supported. In the present embodiment, the EGR mounting flange 41A is fixed to the rear end portion of the right side surface 111H of the cylinder head 1D.

As shown in FIG. 6, the rear bracket 25 may be constituted of one or more, e.g., two, brackets (a first rear bracket 25A, a second rear bracket 25B). The first rear bracket 25A may have a plate shape or a substantially plate shape.

The first rear bracket 25A may be fixed by welding or the like to the rear surface of the second connecting passage 7 in an attitude extending rearward from this rear surface. As shown in FIG. 2, the first rear bracket 25A may extend rearward from the vicinity of the center of the rear surface of the second connecting passage 7 in the up-down direction.

As shown in FIG. 6, the first rear bracket 25A may be disposed at a position to the right of, and spaced apart from the exhaust-side surface 1H. The second rear bracket 25B extends in the left-right direction between the first rear bracket 25A and the exhaust-side surface 1H.

The right end portion of the second rear bracket 25B may be fixed to the rear end portion of the first rear bracket 25A with a bolt. The left end portion of the second rear bracket 25B may be fixed to the exhaust-side surface 1H with a bolt.

For example, a boss 115 protruding toward the right is provided at the rear end portion of the right side surface of the cylinder block 1E at a position in the vicinity of the center in the up-down direction, the right side surface of the cylinder block 1E forming a portion of the exhaust-side surface 1H. The left end portion of the second rear bracket 25B may be fixed to this boss 115 with a bolt. As described previously, the second connecting passage 7 is supported on the right side surface of the cylinder block 1E via the rear bracket 25 and, as a result, the exhaust module 200 is supported.

As shown in FIG. 3 and the like, the lower bracket 26 may be constituted of one or more, e.g., two, brackets (a first lower bracket 26A, a second lower bracket 26B). The first lower bracket 26A may have a plate shape or a substantially plate shape. The first lower bracket 26A may be fixed by welding or the like to the lower surface of the exhaust module 20 in an attitude extending rearward from this lower surface.

As shown in FIG. 7 and the like, the first lower bracket 26A may be fixed to each of the lower surface of the catalyst device 6, the lower surface of the second connecting passage 7, and the lower surface of the filter 8, and extends downward from these lower surfaces. The first lower bracket 26A may be disposed at a position to the right of, and spaced apart from the exhaust-side surface 1H.

As shown in FIG. 3 and the like, the second lower bracket 26B extends in the left-right direction between the first lower bracket 26A and the exhaust-side surface 1H. The right end portion of the second lower bracket 26B may be fixed to the lower end portion of the first lower bracket 26A with a bolt. The left end portion of the second lower bracket 26B may be fixed to the exhaust-side surface 1H with a bolt.

For example, a boss 116 protruding toward the right is provided to the right side surface of the cylinder block 1E at a position in the vicinity of the center in the front-and-rear direction and the up-down direction, the right side surface of the cylinder block 1E forming the portion of the exhaust-side surface 1H. The left end portion of the second lower bracket 26B is fixed to this boss 116 with a bolt. As described previously, the exhaust module 200 is supported on the right side surface of the cylinder block 1E via the lower bracket 26.

### (Manner of operation and the like)

As has been described above, in the exhaust structure for an engine according to the above-mentioned embodiment, the swirling part 53, which swirls exhaust gas, is provided upstream of the catalyst device 6 (in the flow direction of exhaust gas). Therefore, it is possible to cause exhaust gas to flow into the catalyst device 6 after the exhaust gas is dispersed and hence, the exhaust gas can be uniformly introduced into the catalyst device 6. Accordingly, it is possible to efficiently purify exhaust gas with the entire catalyst device 6, thereby improving the exhaust performance of the engine E.

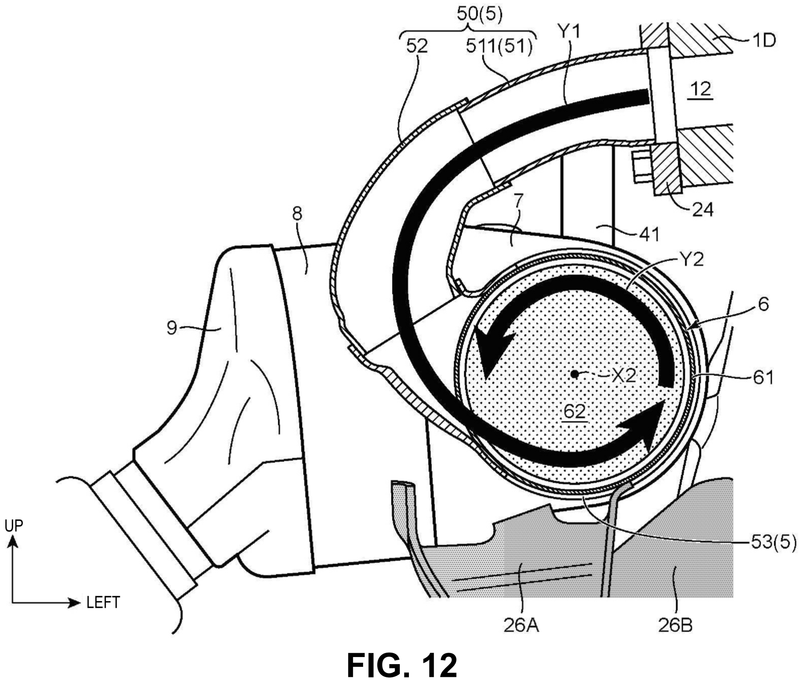

In addition, the entire upstream-side passage 50, which is formed of the independent passages 51 extending from the exhaust port opening ends 12A and the collecting passage 52, is smoothly bent in such a way as to bulge toward the right from the exhaust port opening ends 12A and to extend downward. Consequently, as an exhaust channel extending from the respective exhaust port opening ends 12A to the swirling part 53, the entire upstream-side passage 50 is configured to extend into an arc shape about an axis extending in the cylinder arrangement direction. That is, both of the flow of exhaust gas in the upstream-side passage 50 and the flow of exhaust gas in the swirling part 53 flow about the axis extending in the front-rear direction. Therefore, as shown by an arrow Y1 in FIG. 12, it is possible to cause exhaust gas led out from the respective exhaust port opening ends 12A to smoothly and vigorously flow into the swirling part 53.

Further, in the embodiment, the collecting passage 52, which is disposed upstream of the swirling part 53, is connected to the lower portion of the swirling part 53, the lower portion having the substantially circular inner peripheral surface. Accordingly, as the exhaust channel extending from the respective exhaust port opening ends 12A to the swirling part 53, it is possible to achieve a channel the entirety of which extends into an arc shape along the inner peripheral surface of a portion of the swirling part 53, the portion being located near the connection portion between the swirling part 53 and the upstream-side passage 50. Therefore, as shown by the arrow Y1 in FIG. 12, it is possible to cause exhaust gas led out from the respective exhaust port opening ends 12A to more smoothly and more vigorously flow into the swirling part 53. Accordingly, with the exhaust structure for an engine according to the above-mentioned embodiment, swirling and dispersion of exhaust gas in the swirling part 53 can be promoted and hence, the exhaust gas can be more uniformly introduced into the catalyst device 6, thereby improving the purification performance of the catalyst device 6.

For example, in the above-mentioned embodiment, the three exhaust port opening ends 12A (121A to 123A) are formed at the center portion of the exhaust-side surface 1H in the front-rear direction, and the respective independent passages 51 (511 to 513) are disposed in an attitude in which the independent passages 51 (511 to 513) are nearly parallel to each other.

Therefore, exhaust gas that passes through the respective independent passages 51 is made to flow equally in the collecting passage 52 and the swirling part 53 and hence, it is possible to reduce variation in inflow of exhaust gas into the catalyst device 6 between the independent passages 51, that is, the cylinders 1A. Accordingly, exhaust gas can be uniformly introduced into the catalyst device 6 from all cylinders 1A, thereby improving the purification performance of the catalyst device 6, leading to the reliable improvement of the exhaust performance of the engine E.

In addition, in the above-mentioned embodiment, the exhaust ports 12 of the second cylinder 1A and the third cylinder 1A, whose combustion order is non-consecutive, are collected in the cylinder head 1D, so that although the number of cylinders 1A is four, the number of exhaust port opening ends 12A and the number of independent passages 51 are suppressed to three.

Therefore, the three independent passages 51 can be disposed in an attitude in which the three independent passages 51 are more nearly parallel to each other, thereby more reliably improving the exhaust performance of the engine E. Further, the exhaust ports 12 of the second cylinder 1A and the third cylinder 1A, whose combustion order is non-consecutive, are collected and hence, it is possible to obtain the above-mentioned advantageous effects while exhaust interference between these cylinders 1A is suppressed.

In the above-mentioned embodiment, the catalyst device 6 has a substantially cylindrical shape extending in the front-rear direction, and the swirling part 53 covers the front end surface of the catalyst device 6, that is, the end surface of the catalyst device 6 on the upstream side (in the flow direction of exhaust gas), from the front, with the swirling part 53 disposed in front of the catalyst device 6.

Therefore, in the above-mentioned embodiment, exhaust gas can be swirled and dispersed on the end surface of the catalyst device 6 on the upstream side and hence, it is possible to reliably and uniformly introduce the exhaust gas into the catalyst device 6.

In the above-mentioned embodiment, the swirling part 53 is configured such that, in the cross section shown in FIG. 8, the separation distance between the inner peripheral surface of the swirling part 53 and the front end surface 6A of the catalyst device 6 in the front-rear direction is smaller at the upper area (d1) than at the lower area (d2), the upper area (d1) being located above the center axis X2, the lower area (d2) being located below the center axis X2.

Therefore, dispersion of exhaust gas in the swirling part 53 can be further promoted. For example, as shown in FIG. 12, exhaust gas that flows into the swirling part 53 from the upstream-side passage 50 first passes through the lower portion of the swirling part 53 as shown by the arrow Y1 and, thereafter, passes through the upper portion of the swirling part 53 as shown by an arrow Y2. Therefore, in the upper region of the swirling part 53, a large centrifugal force acts on the exhaust gas, so that the exhaust gas is likely to be deviated toward the outer peripheral side of the swirling part 53. However, in the above-mentioned embodiment, at the upper portion of the swirling part 53, the separation distance (d2) between the inner peripheral surface of the swirling part 53 and the front end surface 6A of the catalyst device 6 in the front-rear direction is set to a relatively small value and hence, the dispersion of the exhaust gas in the radial direction can be promoted, and the deviation of the exhaust gas toward the outer peripheral side can be suppressed. Accordingly, the exhaust gas can be further dispersed along the front end surface of the catalyst device 6.

### (Modification)

In the above-mentioned embodiment, the description has been made for the case in which the swirling part 53 has a substantially circular inner peripheral surface when viewed in the front-rear direction. However, it is sufficient that the swirling part 53 have a configuration that causes exhaust gas to swirl about an axis extending in the front-rear direction, and the specific structure of the swirling part 53 is not limited to the above.

In the above-mentioned embodiment, the description has been made for the case in which the number of cylinders of the engine E is four. However, the number of cylinders is not limited to four. In addition, the engine E is not limited to a gasoline engine. Any device may be used for the catalyst device 6, provided that the device can purify exhaust gas by the action of the catalyst, and the catalyst device 6 is not limited to a monolithic catalyst converter. The catalyst supported on the catalyst body 62 is not limited to a three-way catalyst. Any device may be used for the filter 8, provided that the device captures fine particles in exhaust gas, and the filter 8 is not limited to a ceramic filter having a honeycomb structure.

In the above-mentioned embodiment, the description has been made for the case in which the exhaust ports 12 corresponding to the two cylinders 1A are collected in the cylinder head 1D. However, the exhaust ports 12 extending from the respective cylinders 1A may be caused to be individually open on the exhaust-side surface 1H without being collected in the cylinder head 1D. In addition, the exhaust port opening ends 12A may be provided at a position offset from the center portion of the exhaust-side surface 1H in the front-rear direction.

In the above-mentioned embodiment, the description has been made for the case in which the swirling part 53 have the shapes in which with regard to the separation distance between the inner peripheral surface of the swirling part 53 and the front end surface 6A of the catalyst device 6 in the front-rear direction, the separation distance at the upper area (d1) is smaller than that of at the lower area (d2), the upper area (d1) being located above the center axis X2, the lower area (d2) being located below the center axis X2. However, the specific shape of the swirling part 53 is not limited to the above.

### [Reference Signs List]

- 1: engine body
- 1A: cylinder
- 1H: exhaust-side surface (the side surface of the engine body on the exhaust side)
- 2: exhaust passage
- 6: catalyst device
- 12: exhaust port
- 12A: exhaust port opening end
- 50: upstream-side passage
- 51: independent passage
- 52: collecting passage
- 53: swirling part

## Claims

1. An exhaust structure for an engine (E), the exhaust structure comprising:
an engine body (1) in which a plurality of cylinders (1A) and a plurality of exhaust ports (12) are formed, the plurality of cylinders (1A) being arranged in a cylinder arrangement direction, which is predetermined, the plurality of exhaust ports (12) extending from the plurality of cylinders (1A); and
an exhaust passage (2) through which exhaust gas led out from the engine body (1) flows, wherein
when one side in an engine width direction, which is orthogonal to the cylinder arrangement direction and an up-down direction, is taken as an exhaust side, and an opposite side of the exhaust side is taken as an intake side, a plurality of exhaust port opening ends (12A) are open on a side surface (1H) of the engine body (1) on the exhaust side, the plurality of exhaust port opening ends (12A) being outlets of the plurality of exhaust ports (12),
the exhaust passage (2) includes a plurality of independent passages (51), a collecting passage (52), a catalyst device (6), and a swirling part (53), the plurality of independent passages (51) individually extending in the engine width direction from the plurality of exhaust port opening ends (12A) toward the exhaust side, the collecting passage (52) being connected to end portions of the plurality of independent passages (51) on a downstream side in a flow direction of exhaust gas, the exhaust gas that passes through the plurality of independent passages (51) being collected in the collecting passage (52), the catalyst device (6) being provided downstream of the collecting passage (52) to purify the exhaust gas, the swirling part (53) connecting the collecting passage (52) to the catalyst device (6) to cause the exhaust gas to swirl in the swirling part (53),
the plurality of independent passages (51) and the collecting passage (52) have, as a whole, a shape that is bent in such a way as to bulge toward the exhaust side from the plurality of exhaust port opening ends (12A) and to extend downward, and
the swirling part (53) is configured to cause the exhaust gas led out from the collecting passage (52) to swirl about an axis (X2) extending along the cylinder arrangement direction.

2. The exhaust structure according to claim 1, wherein
the plurality of exhaust port opening ends (12A) are formed at a center portion in the cylinder arrangement direction of the side surface (1H) of the engine body (1) on the exhaust side.

3. The exhaust structure according to claim 1 or 2, wherein
the catalyst device (6) has a cylindrical shape extending in the cylinder arrangement direction, and
the swirling part (53) is configured cover an end portion of the catalyst device (6) on an upstream side in the flow direction of the exhaust gas from one side in the cylinder arrangement direction.

4. The exhaust structure according to any one of the preceding claims, wherein
the swirling part (53) has an inner peripheral surface having a substantially circular shape when viewed along the cylinder arrangement direction, and
an end portion of the collecting passage (52) on a downstream side is connected to a lower portion of a side surface of the swirling part (53), the side surface being located on the exhaust side in the engine width direction.

5. The exhaust structure according to claim 4, wherein
in a cross section of the catalyst device (6), the cross section passing through a center axis of the catalyst device (6) and extending in the up-down direction, a separation distance (d1, d2) between the inner peripheral surface of the swirling part (53) and an upstream end of the catalyst device (6) in the cylinder arrangement direction is smaller at an upper area than a lower area, the upper area being located above a center axis (X2) of the swirling part (53), the lower area being located below the center axis (X2) of the swirling part (53).

6. The exhaust structure according to any one of the preceding claims, wherein
the engine body (1) includes four or more cylinders (1A), and
the exhaust ports (12) of the plurality of cylinders (1A) whose combustion order is non-consecutive are collected in the engine body (1).

7. The exhaust structure according to any one of the preceding claims, wherein
the catalyst device (6) is disposed at a position lower than the exhaust port opening ends (12A).

8. The exhaust structure according to any one of the preceding claims, wherein
a portion of a downstream portion of the collecting passage (52) is integrally formed with the swirling part (53).

9. The exhaust structure according to any one of the preceding claims, wherein
the plurality of independent passages (51) includes a first independent passage (511), a second independent passage (512) and a third independent passage (513),
the first independent passage (511) extends straight or substantially straight, and
the second independent passage (512) and the third independent passage (513) are inclined.

10. The exhaust structure according to claim 9, wherein
an inclination angle of the second independent passage (512) is smaller than an inclination angle of the third independent passage (513).

11. The exhaust structure according to any one of the preceding claims, wherein
a tangent to the collecting passage (52) aligns or substantially aligns with a tangent to the respective independent passages (51).

12. The exhaust structure according to any one of the preceding claims, wherein
the axis (X2) about which the exhaust gas swirls align or substantially align with a center axis of the catalyst device (6).

13. The exhaust structure according to any one of the preceding claims, wherein
the cylinder arrangement direction is a front-rear direction of the engine (E).

14. An engine (E) comprising the exhaust structure according to any one of the preceding claims.

15. A vehicle comprising the engine (E) according to claim 14 or the exhaust structure according to any one claims 1 to 13.
